# EUROPÄISCHE PATENTSCHRIFT

(11) **EP 3 199 758 B1**
(45) Veröffentlichungstag und Bekanntmachung des Hinweises auf die Patenterteilung: **02.05.2018**
(21) Anmeldenummer: 17151934.1
(22) Anmeldetag: 18.01.2017
(51) Int. Cl.: F01D 5/10, F01D 5/34

(54) **ROTOR IN BLISK- ODER BLING-BAUWEISE EINES FLUGTRIEBWERKS**
ROTOR IN BLISK OR BLING STRUCTURE OF AN AIRCRAFT ENGINE
ROTOR DANS UNE TURBINE À GAZ DE TYPE BLISK (DISQUE À AUBES) OU BLING (BAGUE À AUBES)

(30) Priorität: 27.01.2016 DE 102016101427
(43) Veröffentlichungstag der Anmeldung: 02.08.2017
(73) Patentinhaber: Rolls-Royce Deutschland Ltd & Co KG, 15827 Blankenfelde-Mahlow (DE)
(72) Erfinder: Klauke, Thomas, 03222 Lübbenau/Spreewald OT Groß-Beuchow (DE)
(74) Vertreter: Müller, Wolfram Hubertus

(56) Entgegenhaltungen:
- JP-A- 2009 197 649

## Beschreibung

Die Erfindung betrifft einen Rotor in BLISK- oder BLING-Bauweise eines Flugtriebwerks gemäß dem Oberbegriff des Anspruchs 1.

Es stellt ein bekanntes Problem dar, dass die Fan-Schaufeln eines Flugtriebwerks aufgrund einer Vielzahl unterschiedlicher Anströmbedingungen zum Schwingen angeregt werden können. Eine unerwünschte Schwingung der Fan-Schaufeln tritt dabei in verstärktem Maß auf, wenn der Fan in integraler BLISK-Bauweise gefertigt ist (BLISK = "Blade Integrated Disk"), d. h. als ein Bauteil, das einstückig ausgebildet ist und sowohl die Fan-Schaufeln als auch die Fan-Scheibe umfasst, oder in integraler BLING-Bauweise (BLING = "Bladed Ring") ausgeführt ist, d.h. die Schaufeln integral mit dem tragenden Ring hergestellt sind. Dies hängt damit zusammen, dass in integraler Bauweise gefertigte Fans nicht mehr über gesonderte Schaufel-Scheiben-Verbindungen verfügen, welche zur mechanischen Dämpfung des Systems beitragen.

Aufgrund einer geringeren mechanischen Dämpfung von integralen Schaufel-Scheiben-Konstruktionen wird die maximale Schwingungsamplitude der Fan-Schaufeln fast ausschließlich von den aerodynamischen Randbedingungen bedingt. Insbesondere bei Betriebszuständen mit geringer oder sogar negativer aerodynamischer Dämpfung (Flutter) kann dies zu starken Spannungen und Deformationen führen, welche die Lebensdauer des Fans stark beeinträchtigen oder sogar Anrisse verursachen.

Die in Bezug auf Fans erläuterten Probleme treten allgemein bei Rotoren in BLISK- oder BLING-Bauweise auf. Das Dokument JP 2009 197649 A wird als nächstliegender Stand der Technik angesehen. D1 offenbart einen Rotor in BLISK- oder BLING-Bauweise eines Flugtriebwerks, der aufweist:
- eine Rotor-Scheibe, die an ihrem radial äußeren Bereich einen Annulus ausbildet, der einen Strömungskanal des Flugtriebwerks radial innen begrenzt, und
- eine Mehrzahl von Rotor-Schaufeln, die vom Annulus abstehen,
- wobei die Rotor-Scheibe eine erste Struktur und eine zweite Struktur ausbildet, die in radialer Richtung zueinander beabstandet sind, wobei die erste Struktur und die zweite Struktur jeweils einen stromaufwärts und/oder einen stromabwärts in axialer Richtung vorstehenden Arm aufweisen Der vorliegenden Erfindung liegt die Aufgabe zu Grunde, Maßnahmen bereitzustellen, durch die die Dämpfungseigenschaften eines Rotors in BLISK- oder BLING-Bauweise, insbesondere eines Fans in BLISK- oder BLING-Bauweise verbessert werden, so dass der Rotor weniger anfällig für Schwingungsanregungen ist.

Diese Aufgabe wird durch einen Rotor mit den Merkmalen des Anspruchs 1 und einen Fan mit den Merkmalen des Anspruchs 15 gelöst. Ausgestaltungen der Erfindung sind in den Unteransprüchen angegeben.

Danach betrachtet die Erfindung einen Rotor eines Flugtriebwerks, der in BLISK- oder BLING-Bauweise ausgeführt ist. Der Rotor umfasst eine Rotor-Scheibe, die an ihrem radial äußeren Bereich einen Annulus ausbildet, der einen Strömungskanal des Flugtriebwerks radial innen begrenzt. Der Rotor umfasst des Weiteren eine Mehrzahl von Rotor-Schaufeln, die vom Annulus abstehen. Dabei bildet die Rotor-Scheibe eine erste Struktur und eine zweite Struktur aus, die in radialer Richtung zueinander beabstandet sind, wobei die erste Struktur und die zweite Struktur jeweils einen stromaufwärts und/oder einen stromabwärts in axialer Richtung vorstehenden Arm aufweisen.

Bei einem solchen Rotor zeichnet sich die vorliegende Erfindung gemäß einem Erfindungsaspekt dadurch aus, dass ein stromaufwärts angeordneter Arm der ersten Struktur und ein stromaufwärts angeordneter Arm der zweiten Struktur und/oder ein stromabwärts angeordneter Arm der ersten Struktur und ein stromabwärts angeordneter Arm der zweiten Struktur durch ein Dämpfungselement, das ein Elastomer aufweist oder aus einem Elastomer gebildet ist, miteinander verbunden sind.

Durch Verbindung der radial beabstandeten ersten und zweiten Strukturen durch mindestens ein Dämpfungselement, das sich in radialer Richtung erstreckt, wird die zur Schwingungsdämpfung zur Verfügung stehende mechanische Dämpfung signifikant erhöht und werden die resultierenden Schwingungsamplituden des BLISK- oder BLING-Rotors reduziert. Kinetische Energie in Form einer relativen Bewegung zwischen der ersten Struktur und der dazu radial beabstandeten zweiten Struktur wird im Dämpfungselement dissipiert und in Wärme umgewandelt. Hierdurch werden die maximalen Schwingamplituden reduziert und die Bauteillebensdauer erhöht. Durch Dämpfung der Schwingung zwischen den radial beabstandeten ersten und zweiten Strukturen der Rotor-Scheibe wird dabei auch die Schwingung der Rotor-Schaufeln gedämpft.

Die Erfindung erreicht damit eine gewünschte Reduktion der Schwingungsamplituden der Rotor-Schaufeln. Insbesondere führt die Verbindung der radial beabstandeten ersten und zweiten Strukturen durch mindestens ein Dämpfungselement zu einer erhöhten mechanischen Dämpfung desjenigen Bereichs der Rotor-Scheibe, von dem die Rotor-Schaufeln abstehen und der dementsprechend in verstärktem Maße einer Schwingung ausgesetzt ist.

Ein Austausch des Dämpfungselements kann aufgrund seiner Befestigung an Armen der Rotorscheibe ohne Austausch des Rotors erfolgen. Dies erlaubt einen einfachen Ersatz. Weiter wird darauf hingewiesen, dass die durch das Dämpfungselement realisierte Dämpfung ohne einen Verschleiß von Teilen des Rotors eintritt.

Es wird darauf hingewiesen, dass der Begriff "Rotor-Scheibe" im Sinne der vorliegenden Erfindung neben einer eigentlichen Scheibe auch einen Ring umfasst. Der Ring eines Rotors in BLING-Bauweise wird somit ebenfalls als Rotor-Scheibe bezeichnet.

Bei der ersten Struktur der Rotor-Scheibe handelt es sich beispielsweise um den Annulus der Rotor-Scheibe, wobei der Annulus einen in axialer Richtung stromaufwärts vorstehenden Arm, der als Flansch ausgebildet sein kann, und/oder einen in axialer Richtung stromabwärts vorstehenden Arm, der als Flansch ausgebildet sein kann, aufweist. Der Annulus der Rotor-Scheibe bildet die radial innere Begrenzung des Strömungspfads durch den Rotor. Radial außen wird der Strömungspfad typischerweise durch ein Gehäuse begrenzt.

Bei der zweiten Struktur der Rotor-Scheibe handelt es sich beispielsweise um eine Verbindungsstruktur, wobei die Verbindungsstruktur einen in axialer Richtung stromaufwärts vorstehenden Arm und/oder einen in axialer Richtung stromabwärts vorstehenden Arm aufweist. Der in axialer Richtung stromabwärts vorstehende Arm ist beispielsweise dazu vorgesehen und ausgebildet, mit einer Hochdruckwelle, einer Mitteldruckwelle oder einer Niederdruckwelle des Flugtriebwerks gekoppelt zu werden. Sofern es sich bei dem Rotor um einen Fan handelt, ist der in axialer Richtung stromaufwärts vorstehende Arm der Verbindungsstruktur beispielsweise dazu vorgesehen und ausgebildet, mit einem Nasenkonus des Fans verbunden zu werden.

Gemäß einer bevorzugten Ausgestaltung der Erfindung bildet das Dämpfungselement einen kreisförmigen Ring. Da der Rotor sowie die erste Struktur und die zweite Struktur des Rotors jeweils ringförmig ausgebildet sind, stellt es eine zweckmäßige Ausgestaltung dar, auch das Dämpfungselement ringförmig auszubilden. Im Bereich seines radial inneren Randes ist das ringförmige Dämpfungselement dabei mit der zweiten Struktur und im Bereich seines radial äußeren Randes mit der ersten Struktur verbunden. In alternativen Ausgestaltungen kann jedoch vorgesehen sein, dass statt eines ringförmigen Dämpfungselementes eine Mehrzahl von Dämpfungselementen vorgesehen sind, die jeweils ein Ringsegment ausbilden. Auch kann alternativ vorgesehen sein, statt eines ringförmigen Dämpfungselementes eine Vielzahl von stabförmigen Dämpfungselementen einzusetzen.

Eine Ausgestaltung der Erfindung sieht vor, dass das Dämpfungselement im Endbereich bzw. im Bereich der Stirnseite des jeweiligen Arms oder Flansches mit diesem verbunden ist. Hierdurch wird eine besonders starke Dämpfung der radial beabstandeten Arme der ersten und zweiten Struktur bereitgestellt: je weiter das Dämpfungselement an den Enden der Arme befestigt ist, desto stärker die Dämpfung.

Es kann vorgesehen sein, dass das Dämpfungselement über Schraubverbindungen an dem entsprechenden vorstehenden Arm befestigt ist. Hierzu können ein oder mehrere Schraubverbindungen eingesetzt werden. Alternativ kann vorgesehen sein, dass das Dämpfungselement durch eine formschlüssige Verbindung an dem entsprechenden vorstehenden Arm oder Flansch befestigt ist. Eine solche formschlüssige Verbindung wird beispielsweise durch eine Umfangsnut in dem jeweiligen Arm der ersten oder zweiten Struktur bereitgestellt.

Ein Ausführungsbeispiel der Erfindung sieht vor, dass das Dämpfungselement aus einer Elastomerschicht besteht, die an ihrem radial inneren Ende und an ihrem radial äußeren Ende jeweils in einer Einfassung gehalten ist, wobei die Einfassung an dem entsprechenden vorstehenden Arm befestigt ist.

Ein weiteres Ausführungsbeispiel der Erfindung sieht vor, dass das Dämpfungselement aus einer Elastomerschicht besteht, die an ihrem radial inneren Ende und an ihrem radial äußeren Ende jeweils eine Verdickung bildet, die in einer Aussparung an dem jeweiligen Armen der ersten und zweiten Struktur formschlüssig gehalten ist. Dies stellt ein Beispiel für eine formschlüssige Verbindung des Dämpfungselementes mit den ersten und zweiten Strukturen dar. Dabei kann vorgesehen sein, dass in die Verdickung eine Faserverstärkung integriert ist, so dass das Dämpfungselement sicher in der Aussparung (zum Beispiel eine Nut) gehalten wird.

Ein weiteres Ausführungsbeispiel der Erfindung sieht vor, dass das Dämpfungselement ineinandergreifende erste (äußere) und zweite (innere) Finger ausbildet, wobei die ersten Finger mit dem Arm der ersten Struktur und die zweiten Finger mit dem Arm der zweiten Struktur verbunden sind, und wobei zumindest einige der ineinandergreifenden Finger über ein Elastomer oder über ein faserverstärktes Elastomer, beispielsweise ein Gummi oder ein faserverstärktes Gummigewebe miteinander verbunden sind. Im Falle von Schwingungen bzw. Vibrationen wird das Elastomer durch Scherkräfte, die an dem Elastomer angreifen, verformt, was die Dämpfungseigenschaft bewirkt.

Ein weiteres Ausführungsbeispiel der Erfindung sieht vor, dass das Dämpfungselement ineinandergreifende erste (äußere) und zweite (innere) Finger ausbildet, wobei die ersten Finger mit dem Arm der ersten Struktur und die zweiten Finger mit dem Arm der zweiten Struktur verbunden sind, und wobei zumindest einige der ineinandergreifenden Finger über eine viskoelastische Flüssigkeit miteinander verbunden sind. Dabei wird durch eine Dichtung verhindert, dass die viskoelastische Flüssigkeit austreten kann. Diese Ausführungsvariante ist insbesondere geeignet bei Vorliegen hoher Temperaturen.

Bei dem Elastomer, dass einen Bestandteil des Dämpfungselementes darstellt oder dieses vollständig bildet, handelt es sich gemäß einer Ausführungsvariante um ein Gummi. Unter Gummi im Sinne der vorliegenden Erfindung wird jeder vulkanisierte Kautschuk, sowohl Naturkautschuk als auch synthetisierter Kautschuk verstanden.

Gemäß einem anderen Ausführungsbeispiel handelt es sich bei dem Elastomer um ein viskoelastisches Material, das ein teilweise elastisches, teilweise viskoses Materialverhalten aufweist. Von Interesse sind insbesondere sogenannte Kelvin-Körper, die sich zeitabhängig wie eine Flüssigkeit, aber begrenzt und reversibel wie ein Festkörper verformen.

Weiter kann vorgesehen sein, dass das Elastomer zumindest in Teilbereichen mit faserverstärktem Kunststoff verstärkt ist. Es kann sich bei dem Dämpfungselement somit beispielsweise um ein faserverstärktes Gummigewebe handeln. Eine Faserverstärkung erfolgt beispielsweise mit Glasfasern und/oder Kohlenstofffasern.

Eine weitere Ausgestaltung der Erfindung sieht vor, dass das Dämpfungselement mehrere Materiallagen aufweist, wobei mindestens einer der Materiallagen durch ein Elastomer gebildet ist oder ein solches aufweist. Dabei kann vorgesehen sein, dass die mehreren Materiallagen parallel zueinander verlaufen.

Das Dämpfungselement weist eine größere Elastizität bzw. ein kleineres Elastizitätsmodul als das Material auf, aus dem die Rotor-Scheibe des Rotors besteht. Gemäß verschiedener Ausführungsvarianten ist das Elastizitätsmodul des Dämpfungselements um mindestens den Faktor 10, insbesondere um mindestens den Faktor 50, insbesondere um mindestens den Faktor 100, insbesondere um mindestens den Faktor 500 oder insbesondere um mindestens den Faktor 1000 kleiner als der Elastizitätsmodul des Materials der Rotor-Scheibe.

Die Erfindung betrifft in einem weiteren Erfindungsaspekt ein Flugtriebwerk mit einem Rotor nach Anspruch 1. Bei dem Flugtriebwerk handelt es sich beispielsweise um ein Strahltriebwerk, beispielsweise ein Turbofan-Triebwerk.

Die Erfindung betrifft in einem weiteren Erfindungsaspekt einen Fan in BLISK-Bauweise eines Flugtriebwerks, der aufweist:
- eine Fan-Scheibe,
- eine Mehrzahl von Fan-Schaufeln, die mit der Fan-Scheibe verbunden sind,
- wobei die Fanscheibe einen Annulus ausbildet, der einen Strömungskanal des Flugtriebwerks radial innen begrenzt, wobei der Annulus einen in axialer Richtung stromaufwärts vorstehenden Arm und/oder einen in axialer Richtung stromabwärts vorstehenden Arm aufweist,
- wobei die Fanscheibe eine Verbindungsstruktur ausbildet, die einen in axialer Richtung stromaufwärts vorstehenden Arm und/oder einen in axialer Richtung stromabwärts vorstehenden Arm aufweist,
- wobei die Arme des Annulus und die Arme der Verbindungsstruktur in radialer Richtung zueinander beabstandet sind,
- wobei ein stromaufwärts angeordneter Arm des Annulus und ein stromaufwärts angeordneter Arm der Verbindungsstruktur und/oder ein stromabwärts angeordneter Arm des Annulus und ein stromabwärts angeordneter Arm der Verbindungsstruktur durch ein Dämpfungselement miteinander verbunden sind, und
- wobei das Dämpfungselement ein Elastomer aufweist oder aus einem Elastomer gebildet ist.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines als Zweistrom-Strahltriebwerk ausgebildeten Flugtriebwerks, das einen Fan umfasst;
- Figur 2: ein erstes Ausführungsbeispiel eines Fans in BLISK-Bauweise, bei dem jeweils ein Arm eines Annulus und ein Arm einer Verbindungsstruktur durch ein Dämpfungselement miteinander verbunden sind;
- Figur 3: eine vergrößerte perspektivische Darstellung des Dämpfungselements der Figur 2, wobei das Dämpfungselement eine Elastomerschicht aufweist, die an ihrem oberen und an ihrem unteren Rand jeweils in einer Einfassung gehalten ist;
- Figur 4: eine Darstellung des Dämpfungselements der Figur 2 in einer Ansicht von vorne;
- Figur 5: ein zweites Ausführungsbeispiel eines Fans in BLISK-Bauweise, bei dem jeweils ein Arm eines Annulus und ein Arm einer Verbindungsstruktur durch ein Dämpfungselement miteinander verbunden sind;
- Figur 6: eine vergrößerte perspektivische Darstellung des Dämpfungselements der Figur 5, wobei das Dämpfungselement aus einer Elastomerschicht besteht, die an ihrem radial inneren Ende und an ihrem radial äußeren Ende jeweils eine Verdickung bildet;
- Figur 7: ein drittes Ausführungsbeispiel eines Fans in BLISK-Bauweise, bei dem ein Arm eines Annulus und ein Arm einer Verbindungsstruktur durch ein Dämpfungselement miteinander verbunden sind;
- Figur 8: eine vergrößerte Darstellung des Dämpfungselement der Figur 7, unter Darstellung des unverformten und eines verformten Zustands; und
- Figur 9: ein viertes Ausführungsbeispiel eines Fans in BLISK-Bauweise, bei dem ein Arm eines Annulus und ein Arm einer Verbindungsstruktur durch ein Dämpfungselement miteinander verbunden sind.

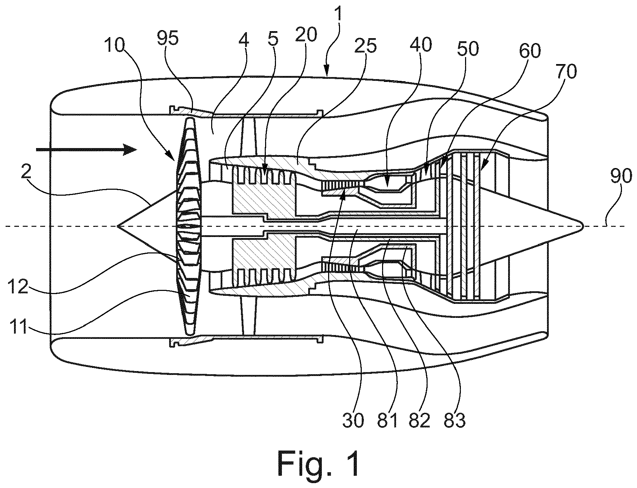

Die Figur 1 zeigt schematisch ein Zweistrom-Strahltriebwerk 1, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Strahltriebwerk 1 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Strahltriebwerk beispielsweise keinen Mitteldruckverdichter und keine Mitteldruckturbine besitzt, wären nur eine Niederdruckwelle und eine Hochdruckwelle vorhanden.

Der Fan 10 weist eine Mehrzahl von Fan-Schaufeln 11 auf, die mit einer Fan-Scheibe 12 verbunden sind. Der Annulus der Fan-Scheibe 12 bildet dabei die radial innere Begrenzung des Strömungspfads durch den Fan 10. Radial außen wird der Strömungspfad durch ein Fangehäuse 95 begrenzt. Stromaufwärts der Fan-Scheibe 12 ist ein Nasenkonus 2 angeordnet.

Hinter dem Fan 10 bildet das Strahltriebwerk 1 einen Sekundärstromkanal 4 und einen Primärstromkanal 5 aus. Der Primärstromkanal 5 führt durch das Kerntriebwerk, das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 25 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Die beschriebenen Komponenten besitzen eine gemeinsame Symmetrieachse 90. Die Symmetrieachse 90 definiert eine axiale Richtung des Flugtriebwerks. Eine radiale Richtung des Flugtriebwerks verläuft senkrecht zur axialen Richtung.

Im Kontext der vorliegenden Erfindung ist der Fan 10 von besonderer Bedeutung, wie nachfolgend erläutert werden wird.

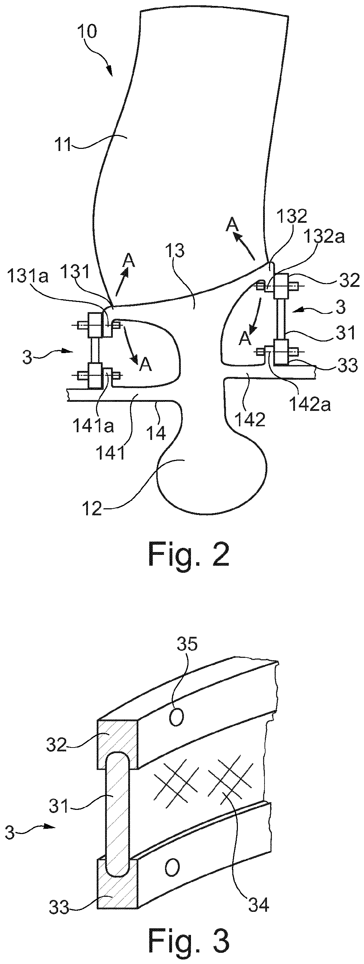

Die Figur 2 zeigt ein Ausführungsbeispiel eines Fans 10, der Fan-Schaufeln 11 und eine Fan-Scheibe 12 aufweist. Der Fan 10 ist in BLISK-Bauweise ausgeführt. Die Fan-Scheibe 12 bildet in ihrem radial äußeren Bereich einen Annulus 13 aus, von dem die Fan-Schaufeln 11 in radialer Richtung abstehen. Der Annulus 13 bildet die radial innere Begrenzung des Strömungskanals des Fans 10. Der Annulus 13 kann auch als Plattform oder als Scheibenrand bezeichnet werden.

Der Annulus 13 bildet zwei Arme aus, einen stromaufwärts angeordneten Arm 131 und einen stromabwärts angeordneter Arm 132. Es handelt sich bei diesen Strukturen 131, 132 insofern um Arme, als sich radial unterhalb der Strukturen 131, 132 eine Materialaussparung befindet. Ein Arm im Sinne der vorliegenden Erfindung ist jede Struktur, die in zumindest einer Raumrichtung gegenüber einer anderen Struktur vorsteht. Die Arme 131, 132 stehen stromaufwärts oder stromabwärts (das heißt entgegen der axialen Richtung oder in axialer Richtung) insofern vor, als sie gegenüber dem Hauptkörper der Fan-Scheibe 12 vorstehen, wobei sich unterhalb der Arme 131, 132 (d.h. in radialer Richtung nach innen) kein Material befindet.

Die Fan-Scheibe 12 umfasst des Weiteren eine Verbindungsstruktur 14, die ebenfalls zwei Arme aufweist, einen stromaufwärts angeordneten Arm 141 und einen stromabwärts angeordneter Arm 142. Der Arm 141 ist dazu vorgesehen und ausgebildet ist, mit einem Nasenkonus des Fans 10 verbunden zu werden. Der Arm 142 ist dazu vorgesehen und ausgebildet ist, mit einer Niederdruckwelle des Flugtriebwerks gekoppelt zu werden (vgl. Niederdruckwelle 81 der Figur 1). Daher handelt es sich insbesondere bei dem Arm 142 um einen Antriebsarm ("drive arm"). Die Verbindung des jeweiligen Arms 141, 142 mit einem Nasenkonus oder mit einer Niederdruckwelle kann direkt oder über Zwischenelemente erfolgen.

Bei einer Schwingungsanregung der Schaufeln 11 tritt die Situation auf, dass die Arme 131, 132 des Annulus 13 gegenüber den Armen 141, 142 der Verbindungsstruktur 14 in Schwingung geraten, wie durch die Pfeile A angedeutet ist.

Diese relative Schwingbewegung zwischen den Armen 131, 132 und den Armen 141, 142 wird durch erfindungsgemäß vorgesehene Dämpfungselemente 3 reduziert. So sind die Arme 131, 141 an ihrem jeweiligen Ende durch ein Dämpfungselement 3 und die Arme 132, 142 an ihrem jeweiligen Ende durch ein Dämpfungselement 3 miteinander verbunden. Hierzu bilden die Arme jeweils einen Flansch bzw. eine Stirnfläche 131a, 141a, 132a, 142a aus, an der der jeweilige Randbereich des Dämpfungselements 3 mittels Verschraubungen befestigt ist.

Die Dämpfungselemente 3 bewirken eine Dämpfung der Schwingung zwischen den Armen 131, 132 des Annulus 13 und den dazu in radialer Richtung beabstandeten Armen 141, 142 der Verbindungsstruktur 14. Diese Dämpfung der Schwingung A führt zu einer erwünschten Dämpfung der Schwingungsamplitude der Schaufeln 11.

Wie auch der vergrößerten Darstellung der Figur 3 zu entnehmen ist, weist das Dämpfungselement 3 im dargestellten Ausführungsbeispiel eine Elastomerschicht 31 als Dämpfungsmaterial auf. Die Elastomerschicht 31 besteht beispielsweise aus Gummi. Das Gummi kann eine Faserverstärkung 34 aufweisen. Die Elastomerschicht 31 kann homogen ausgebildet sein oder aus unterschiedlichen Materiallagen bestehen. Am radial äußeren Rand und am radial inneren Rand ist die Elastomerschicht 31 jeweils in einer Einfassung 32, 33 gehalten. Die Einfassung 32, 33 weist Löcher 35 auf, mittels derer das Dämpfungselement 3 über Schrauben an den jeweiligen Armen 131, 141, 132, 142 befestigbar ist.

Es wird darauf hingewiesen, dass im Ausführungsbeispiel der Figur 2 ein Dämpfungselement sowohl an der stromaufwärts gelegenen Seite des Fans 10 als auch an der stromabwärts gelegenen Seite des Fans 10 vorgesehen ist. Dies ist aber nicht notwendigerweise der Fall. So kann in alternativen Ausführungsbeispielen der Erfindung vorgesehen sein, dass ein Dämpfungselement 3 nur auf einer dieser Seiten realisiert ist. Dies kann in Abhängigkeit davon erfolgen, an welcher Seite die relativen Schwingbewegungen des Annulus 13 bzw. dessen Arme 131, 132 in Bezug auf die Verbindungsstruktur 141, 142 ausgeprägter sind.

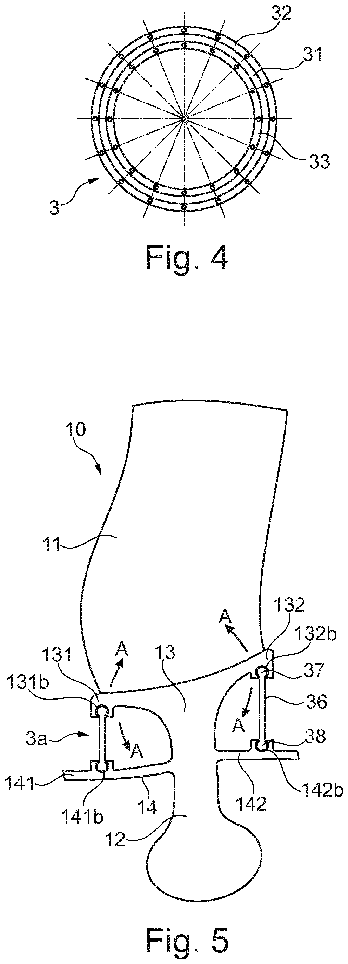

Die Figur 4 zeigt das Dämpfungselement 3 der Figuren 2 und 3 in einer Ansicht von vorne. Dabei ist gut zu erkennen, dass das Dämpfungselement 3 in einer Ausgestaltung als kreisförmiger Ring ausgebildet ist, entsprechend der ringförmigen Ausbildung der Fan-Scheibe 12 sowie der jeweiligen Arme 131, 132, 141, 142. Die Figur 4 zeigt die ringförmige Elastomerschicht 31 und die beiden ringförmigen Einfassungen 32, 33, die sich am radial äußeren und am radial inneren Ende der Elastomerschicht 31 anschließen. Die Einfassungen 32, 33 sind beispielsweise über Schraubenverbindungen mit dem jeweiligen Arm, der ebenfalls einen kreisförmigen Ring bildet, verbunden.

Die Figur 5 zeigt ein alternatives Ausführungsbeispiel, dass sich vom Ausführungsbeispiel der Figur 2 durch die Ausgestaltung der Dämpfungselemente 3a unterscheidet. Ansonsten wird im Hinblick auf den Aufbau des Fans 10 der Figur 5 auf die entsprechenden Ausführungen zu Figur 2 verwiesen.

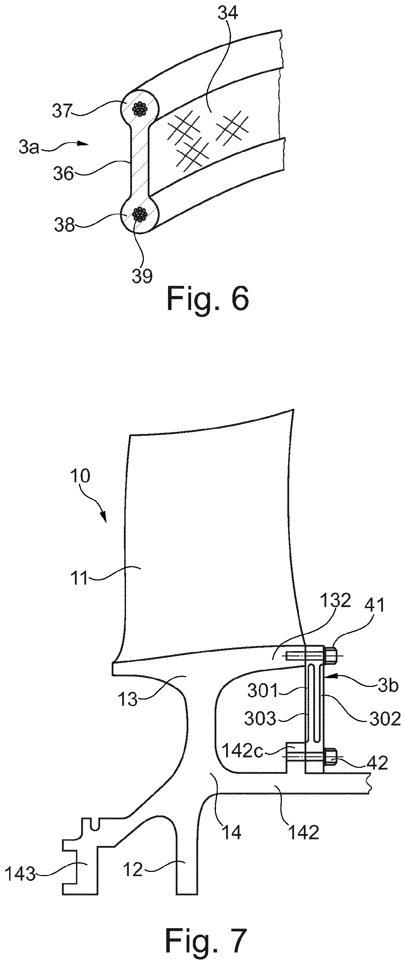

Wie auch in der vergrößerten Darstellung der Figur 6 gezeigt ist, besteht das Dämpfungselement 3a aus einer Elastomerschicht 36, die an ihrem radial äußeren Ende und an ihrem radial inneren Ende jeweils eine Verdickung 37, 38 bildet, die in einer Aussparung 131b, 141b, 132b, 142b an den jeweiligen Armen 131, 141, 132, 142 der ersten und zweiten Struktur 13, 14 formschlüssig gehalten ist. Die Elastomerschicht 31 besteht wiederum beispielsweise aus Gummi, das mit einer Faserverstärkung 34 versehen sein kann.

Dabei ist vorgesehen, dass im Bereich der Verdickungen 37, 38 eine sich längs erstreckende Faser oder ein sich längs erstreckendes Faserbündel 39 integriert ist, um die Verdickungen 37, 38 mechanisch zu verstärken und die Möglichkeit einer zu starken Kompression der Verdickungen 37, 38 zu verhindern.

Die Aussparungen 131b, 141b, 132b, 142b der jeweiligen Armen 131, 141, 132, 142 sind jeweils durch eine Umfangsnut gebildet. In einer Ausgestaltung kann vorgesehen sein, dass die Dämpfungselemente 3a in einfacher Weise in die Umfangsnuten eingeklippst werden, was eine einfache Montage und einen einfachen Austausch im Falle einer Reparatur ermöglicht.

Auch für das Ausführungsbeispiel der Figuren 5 und 6 gilt, dass die Anordnung eines Dämpfungselementes 3a alternativ nur an der stromaufwärts gewandten Seite oder nur an der stromabwärts gewandten Seite der Fan-Scheibe 12 realisiert sein kann.

Die Figur 7 zeigt ein weiteres Ausführungsbeispiel eines Fans 10 mit Fan-Scheibe 12 und Fan-Schaufeln 11. Abweichend von den Ausführungsbeispielen der Figuren 2-6 ist ein Dämpfungselement 3b bei diesem Ausführungsbeispiel nur auf der stromabwärts gewandten Seite des Fans 10 realisiert. Dabei weist der Annulus 13 einen sich stromabwärts erstreckenden Arm 132 und weist die Verbindungstrutur 14 einen sich stromabwärts erstreckenden Arm 142 mit einem Flansch 142c auf, die in radialer Richtung zueinander beabstandet sind und zwischen denen sich dementsprechend eine Materialaussparung befindet. An der stromaufwärts gewandten Seite der Verdichter-Scheibe 12 weist die Verbindungsstruktur 14 einen Arm 143 auf, der bei der dargestellten Ausführungsvariante radial schräg nach innen verläuft und an seinem Ende Strukturen zur Verbindung mit anderen Bauteilen aufweist.

Das Dämpfungselement 3b umfasst jeweils radial verlaufende, ineinandergreifende äußere Finger 301 und innere Finger 302, wobei die äußeren Finger 301 mit dem Arm 132 des Annulus 13 und die inneren Finger 302 mit dem Arm 142 der Verbindungsstruktur 14 verbunden sind. Dabei sind die ineinandergreifenden Finger 301, 302 über eine Elastomerschicht 303, die faserverstärkt sein kann, miteinander verbunden. Die Finger 301, 302 sind im Bereich ihres Fußes über Schraubverbindungen 41, 42 mit dem jeweiligen Arm bzw. Flansch 132, 142c verbunden.

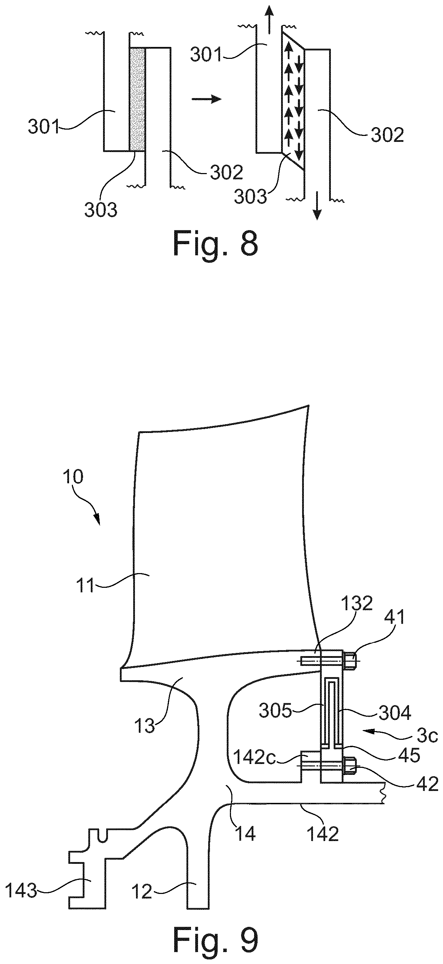

Die Funktionsweise der Dämpfung beim Ausführungsbeispiel der Figur 7 illustriert die Figur 8. Es sind die aneinander angrenzenden Lagen vom äußeren Finger 301, faserverstärktem Elastomer 303 und dem inneren Finger 302 dargestellt. Schwingungen des Annulus 13 werden auf den äußeren Finger 301 übertragen und wirken als Scherkräfte auf das Elastomer 303, wie in der rechten Darstellung der Figur 8 dargestellt ist. Ein Teil der Schwingungsenergie wird in dem Elastomer 303 dissipiert und führt zur einer Schwingungsdämpfung.

Es wird darauf hingewiesen, dass die Figur 8 eine Schnittdarstellung ist. Die äußeren Finger 301, inneren Finger 302 und die Elastomerschicht 303 sind jeweils ringförmig ausgebildet. Es können eine oder mehrere äußere und innere Finger mit jeweils dazwischen angeordneter Elastomerschicht vorgesehen sein.

Die Figur 9 zeigt ein Ausführungsbeispiel, das ähnlich dem Ausführungsbeispiel der Figur 7 ist und sich von letzterem durch das Dämpfungsmaterial des Dämpfungselements 3c unterscheidet. Dabei ist wiederum eine Anordnung 305 von ineinandergreifenden Fingern vorgesehen. Insofern wird auf die Beschreibung zu Figur 7 verwiesen. Als Dämpfungsmaterial ist eine viskoelastische Flüssigkeit 304 vorgesehen, über die die ineinandergreifenden Finger miteinander verbunden sind. Die Verwendung einer viskoelastischen Dämpfungsflüssigkeit ist insbesondere bei Auftreten hoher Temperaturen und Schwingfrequenzen vorteilhaft. Um ein Austreten der Flüssigkeit 304 zu verhindern, sind Dichtungen 45 vorgesehen.

Die vorliegende Erfindung wurde vorstehend anhand mehrerer Ausführungsbeispiele beschrieben, die sich auf Fans in BLISK-Bauweise beziehen. Die Prinzipien der vorliegenden Erfindung gelten jedoch in gleicher Weise auch für andere Rotoren in BLISK-Bauweise oder in BLING-Bauweise, insbesondere für Rotoren einer Verdichterstufe eines Flugtriebwerks. Hierbei kann es sich um Rotoren einer Verdichterstufe eines Niederdruckverdichters, eines Mitteldruckverdichters oder eines Hochdruckverdichters handeln. Die Rotorschaufeln solcher Rotoren sind ebenfalls Schwingungen ausgesetzt, die in der beschriebenen Weise unter Verwendung von Dämpfungselementen gedämpft werden können.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Rotor (10) in BLISK- oder BLING-Bauweise eines Flugtriebwerks, der aufweist:
- eine Rotor-Scheibe (12), die an ihrem radial äußeren Bereich einen Annulus (13) ausbildet, der einen Strömungskanal des Flugtriebwerks radial innen begrenzt, und
- eine Mehrzahl von Rotor-Schaufeln (11), die vom Annulus (12) abstehen,
- wobei die Rotor-Scheibe (12) eine erste Struktur (13) und eine zweite Struktur (14) ausbildet, die in radialer Richtung zueinander beabstandet sind, wobei die erste Struktur (13) und die zweite Struktur (14) jeweils einen stromaufwärts und/oder einen stromabwärts in axialer Richtung vorstehenden Arm (131, 132, 141, 142) aufweisen,
**dadurch gekennzeichnet,**
**dass** ein stromaufwärts angeordneter Arm (131) der ersten Struktur (13) und ein stromaufwärts angeordneter Arm (141) der zweiten Struktur (14) und/oder
ein stromabwärts angeordneter Arm (132) der ersten Struktur (13) und ein stromabwärts angeordneter Arm (142) der zweiten Struktur (14) durch ein Dämpfungselement (3, 3a, 3b, 3c), das ein Elastomer (31, 36, 303, 304) aufweist oder aus einem Elastomer (31, 36, 303, 304) gebildet ist, miteinander verbunden sind.

2. Rotor nach Anspruch 1, **dadurch gekennzeichnet, dass** das Dämpfungselement (3, 3a, 3b, 3c) einen Ring oder Ringsegmente bildet.

3. Rotor nach Anspruch 1 oder 2, **dadurch gekennzeichnet, dass** das Dämpfungselement (3) aus einer Elastomerschicht (31) besteht, die an ihrem radial inneren Ende und an ihrem radial äußeren Ende jeweils in einer Einfassung (32, 33) gehalten ist, wobei die Einfassung (32, 33) an dem entsprechenden vorstehenden Arm (131, 132, 141, 142) befestigt ist.

4. Rotor nach Anspruch 1 oder 2, **dadurch gekennzeichnet, dass** das Dämpfungselement (3a) aus einer Elastomerschicht (36) besteht, die an ihrem radial inneren Ende und an ihrem radial äußeren Ende jeweils eine Verdickung (37, 38) bildet, die in einer Aussparung (131b, 132b, 141b, 142b) an den jeweiligen Armen (131, 132, 141, 142) der ersten und zweiten Struktur (13, 14) formschlüssig gehalten ist.

5. Rotor nach Anspruch 1 oder 2, **dadurch gekennzeichnet, dass** das Dämpfungselement (3b) ineinander greifende äußere und innere Finger (301, 302) ausbildet, wobei die äußeren Finger (301) mit dem Arm (132) der ersten Struktur (13) und die inneren Finger (302) mit dem Arm (142) der zweiten Struktur (14) verbunden sind, und wobei zumindest einige der ineinandergreifenden Finger (301, 302) über ein Elastomer oder über ein faserverstärktes Elastomer (303) miteinander verbunden sind.

6. Rotor nach Anspruch 1 oder 2, **dadurch gekennzeichnet, dass** das Dämpfungselement (3c) ineinander greifende äußere und innere Finger (305) ausbildet, wobei die äußeren Finger mit dem Arm (132) der ersten Struktur (13) und die inneren Finger mit dem Arm (142) der zweiten Struktur (14) verbunden sind, und wobei zumindest einige der ineinandergreifenden Finger (305) über eine viskoelastische Flüssigkeit (304) miteinander verbunden sind.

7. Rotor nach einem der vorangehenden Ansprüche, **dadurch gekennzeichnet, dass** das Elastomer (31, 36, 303, 304) ein Gummi ist.

8. Rotor nach einem der vorangehenden Ansprüche, **dadurch gekennzeichnet, dass** das Elastomer (31, 36, 303, 304) ein viskoelastisches Material ist.

9. Rotor nach einem der vorangehenden Ansprüche, **dadurch gekennzeichnet, dass** das Elastomer (31, 36, 303, 304) zumindest in Teilbereichen mit faserverstärktem Kunststoff verstärkt ist.

10. Rotor nach einem der vorangehenden Ansprüche, **dadurch gekennzeichnet, dass** das Dämpfungselement mehrere Materiallagen aufweist, wobei mindestens einer der Materiallagen durch ein Elastomer gebildet ist oder ein solches aufweist.

11. Rotor nach einem der vorangehenden Ansprüche, **dadurch gekennzeichnet, dass** die erste Struktur (13) durch den Annulus der Rotor-Scheibe (12) gebildet ist, wobei der Annulus (13) einen in axialer Richtung stromaufwärts vorstehenden Arm (131) und/oder einen in axialer Richtung stromabwärts vorstehenden Arm (132) aufweist.

12. Rotor nach einem der vorangehenden Ansprüche, **dadurch gekennzeichnet, dass** die zweite Struktur (14) durch eine Verbindungsstruktur gebildet ist, wobei die Verbindungsstruktur einen in axialer Richtung stromabwärts vorstehenden Arm (142) aufweist, wobei der in axialer Richtung stromabwärts vorstehende Arm (142) der Verbindungsstruktur (14) dazu vorgesehen und ausgebildet ist, mit einer Hochdruckwelle, einer Mitteldruckwelle oder einer Niederdruckwelle (81) des Flugtriebwerks (1) gekoppelt zu werden.

13. Rotor nach einem der vorangehenden Ansprüche, **dadurch gekennzeichnet, dass** der Rotor (10) ein Fan in BLISK-Bauweise ist, wobei die Rotor-Schaufeln (12) Fan-Schaufeln sind und die Rotor-Scheibe (11) eine Fan-Scheibe ist, wobei die zweite Struktur (14) durch eine Verbindungsstruktur gebildet ist, die einen in axialer Richtung stromaufwärts vorstehenden Arm aufweist, und wobei der in axialer Richtung stromaufwärts vorstehende Arm (141) der Verbindungsstruktur (14) dazu vorgesehen und ausgebildet ist, mit einem Nasenkonus (2) des Fans verbunden zu werden.

14. Rotor nach einem der vorangehenden Ansprüche, **dadurch gekennzeichnet, dass** das Dämpfungselement (3, 3a, 3b, 3c) einen Elastizitätsmodul aufweist, der um mindestens den Faktor 10, insbesondere um mindestens den Faktor 50, insbesondere um mindestens den Faktor 100, insbesondere um mindestens den Faktor 500, insbesondere um mindestens den Faktor 1000 kleiner als der Elastizitätsmodul des Materials der Rotor-Scheibe (12).

15. Fan (10) in BLISK-Bauweise eines Flugtriebwerks, der aufweist:
- eine Fan-Scheibe (12),
- eine Mehrzahl von Fan-Schaufeln (11), die mit der Fan-Scheibe (12) verbunden sind,
- wobei die Fanscheibe (12) einen Annulus (13) ausbildet, der einen Strömungskanal des Flugtriebwerks radial innen begrenzt, wobei der Annulus (13) einen in axialer Richtung stromaufwärts vorstehenden Arm (131) und/oder einen in axialer Richtung stromabwärts vorstehenden Arm (132) aufweist,
- wobei die Fanscheibe (12) eine Verbindungsstruktur (14) ausbildet, die einen in axialer Richtung stromaufwärts vorstehenden Arm (141) und/oder einen in axialer Richtung stromabwärts vorstehenden Arm (142) aufweist,
- wobei die Arme (131, 132) des Annulus (13) und die Arme (141, 142) der Verbindungsstruktur (14) in radialer Richtung zueinander beabstandet sind,
- wobei ein stromaufwärts angeordneter Arm (131) des Annulus (13) und ein stromaufwärts angeordneter Arm (141) der Antriebsstruktur (141) und/oder ein stromabwärts angeordneter Arm (132) des Annulus (13) und ein stromabwärts angeordneter Arm (142) der Verbindungsstruktur (14) durch ein Dämpfungselement (3, 3a, 3b, 3c) miteinander verbunden sind, und
- wobei das Dämpfungselement (3, 3a, 3b, 3c) ein Elastomer (31, 36, 303, 304) aufweist oder aus einem Elastomer (31, 36, 303, 304) gebildet ist.

## Claims

1. Rotor (10) in BLISK or BLING design of an aircraft engine, comprising:
- a rotor disc (12) that, at its radially outer area, forms an annulus (13) that delimitates the flow channel of the aircraft engine radially inside, and
- a plurality of rotor blades (11) that project from the annulus (12),
- wherein the rotor disc (12) forms a first structure (13) and a second structure (14), which are arranged at a distance to each other in the radial direction, wherein the first structure (13) and the second structure (14) respectively have an arm (131, 132, 141, 142) that projects upstream and/or downstream in the axial direction,
**characterized in that**
an arm (131) of the first structure (13) arranged upstream and an arm (141) of the second structure (14) arranged upstream
and/or
an arm (132) of the first structure (13) arranged downstream and an arm (142) of the second structure (14) arranged downstream are connected to each other by means of a damping element (3, 3a, 3b, 3c) that comprises an elastomer (31, 36, 303, 304) or consists of an elastomer (31, 36, 303, 304).

2. Rotor according to claim 1, **characterized in that** the damping element (3, 3a, 3b, 3c) forms a ring or ring segments.

3. Rotor according to claim 1 or 2, **characterized in that** the damping element (3) consist of an elastomer layer (31) which is respectively held inside an edging (32, 33) at its radially inner end and at its radially outer end, wherein the edging (32, 33) is attached at the respective projecting arm (131, 132, 141, 142).

4. Rotor according to claim 1 or 2, **characterized in that** the damping element (3a) consists of an elastomer layer (36) that respectively forms a bulge (37, 38) at its radially inner end and at its radially outer end, with the bulge (37, 38) being held inside a recess (131b, 132b, 141b, 142b) in a positive-locking manner at the respective arms (131, 132, 141, 142) of the first and the second structure (13, 14).

5. Rotor according to claim 1 or 2, **characterized in that** the damping element (3b) forms meshing outer and inner fingers (301, 302), wherein the outer fingers (301) are connected to the arm (132) of the first structure (13) and the inner fingers (302) are connected to the arm (142) of the second structure (14), and wherein at least some of the meshing fingers (301, 302) are connected to each other by means of an elastomer or by means of a fiber-reinforced elastomer (303).

6. Rotor according to claim 1 or 2, **characterized in that** the damping element (3c) forms meshing outer and inner fingers (305), wherein the outer fingers are connected to the arm (132) of the first structure (13) and the inner fingers are connected to the arm (142) of the second structure (14), and wherein at least some of the meshing fingers (305) are connected to each other by means of a viscoelastic fluid (304).

7. Rotor according to any of the preceding claims, **characterized in that** the elastomer (31, 36, 303, 304) is a rubber.

8. Rotor according to any of the preceding claims, **characterized in that** the elastomer (31, 36, 303, 304) is a viscoelastic material.

9. Rotor according to any of the preceding claims, **characterized in that**, at least in partial areas, the elastomer (31, 36, 303, 304) is reinforced with a fiber-reinforced synthetic material.

10. Rotor according to any of the preceding claims, **characterized in that** the damping element has multiple material layers, wherein at least one of the material layers is formed by an elastomer or comprises such an elastomer

11. Rotor according to any of the preceding claims, **characterized in that** the first structure (13) is formed by the annulus of the rotor disc (12), wherein the annulus (13) has an arm (131) that projects upstream in the axial direction and/or an arm (132) that projects downstream in the axial direction.

12. Rotor according to any of the preceding claims, **characterized in that** the second structure (14) is formed by a connection structure, wherein the connection structure has an arm (142) that projects downstream in the axial direction, wherein the arm (142) of the connection structure (14) that projects downstream in the axial direction is provided and embodied for the purpose of being coupled to a high-pressure shaft, a medium-pressure shaft or a low-pressure shaft of the aircraft engine (1).

13. Rotor according to any of the preceding claims, **characterized in that** the rotor (10) is a fan in BLISK design, wherein the rotor blades (12) are fan blades and the rotor disc (11) is a fan disc, wherein the second structure (14) is formed by a connection structure having an arm that projects upstream in the axial direction, and wherein the arm (141) of the connection structure (14) that projects upstream in the axial direction is provided and configured for the purpose of being connected to a nose cone (2) of the fan.

14. Rotor according to any of the preceding claims, **characterized in that** the damping element (3, 3a, 3b, 3c) has a modulus of elasticity that is smaller than the modulus of elasticity of the material of the rotor disc (12) by at least the factor 10, in particular by at least the factor 50, in particular by at least the factor 100, in particular by at least the factor 500, in particular by at least the factor 1000.

15. Fan (10) in BLISK design of an aircraft engine, comprising:
- a fan disc (12),
- a plurality of fan blades (11) that are connected to the fan disc (12),
- wherein the fan disc (12) forms an annulus (13) that delimitates a flow channel of the aircraft engine radially inside, wherein the annulus (13) has an arm (131) that projects upstream in the axial direction and/or an arm (132) that projects downstream in the axial direction,
- wherein the fan disc (12) forms a connection structure (14) that has an arm (141) that projects upstream in the axial direction and/or an arm (142) that projects downstream in the axial direction,
- wherein the arms (131, 132) of the annulus (13) and the arms (141, 142) of the connection structure (14) are arranged at a distance from each other in the radial direction,
- wherein an arm (131) of the annulus (13) arranged upstream and an arm (141) of the drive structure (141) arranged upstream and/or an arm (132) of the annulus (13) arranged downstream and an arm (142) of the connection structure (14) arranged downstream are connected to each other by means of a damping element (3, 3a, 3b, 3c), and
- wherein the damping element (3, 3a, 3b, 3c) comprises an elastomer (31, 36, 303, 304) or is formed from an elastomer (31, 36, 303, 304).

## Revendications

1. Rotor (10) de construction de type BLISK (disque à aubes) ou BLING (bague à aubes) pour un moteur d'avion, présentant :
- un disque de rotor (12) qui forme un anneau (13) au niveau de sa région radialement extérieure, qui délimite, radialement à l'intérieur, un canal d'écoulement du moteur d'avion et
- une pluralité d'aubes de rotor (11) qui font saillie depuis l'anneau (12),
- le disque de rotor (12) présentant une première structure (13) et une deuxième structure (14), lesdites structures étant espacées l'une de l'autre dans la direction radiale, la première structure (13) et la deuxième structure (14) présentant à chaque fois un bras faisant saillie dans la direction axiale vers l'amont et/ou vers l'aval (131, 132, 141, 142),
**caractérisé en ce**
**qu'**un bras disposé en amont (131) de la première structure (13) et un bras disposé en amont (141) de la deuxième structure (14) et/ou
un bras disposé en aval (132) de la première structure (13) et un bras disposé en aval (142) de la deuxième structure (14) sont connectés l'un à l'autre par un élément d'amortissement (3, 3a, 3b, 3c) qui présente un élastomère (30, 36, 303, 304) ou qui est formé par un élastomère (31, 36 303, 304).

2. Rotor selon la revendication 1, **caractérisé en ce que** l'élément d'amortissement (3, 3a, 3b, 3c) forme une bague ou des segments de bague.

3. Rotor selon la revendication 1 ou 2, **caractérisé en ce que** l'élément d'amortissement (3) se compose d'une couche élastomère (31) qui est retenue au niveau de son extrémité radialement intérieure et au niveau de son extrémité radialement extérieure à chaque fois dans une monture (32, 33), la monture (32, 33) étant fixée au bras saillant correspondant (131, 132, 141, 142).

4. Rotor selon la revendication 1 ou 2, **caractérisé en ce que** l'élément d'amortissement (3a) se compose d'une couche élastomère (36) qui forme, au niveau de son extrémité radialement intérieure et au niveau de son extrémité radialement extérieure, à chaque fois un épaississement (37, 38), lequel est retenu par engagement par correspondance de formes dans un évidement (131b, 132b, 141b, 142b) au niveau des bras respectifs (131, 132, 141, 142) de la première et de la deuxième structure (13, 14).

5. Rotor selon la revendication 1 ou 2, **caractérisé en ce que** l'élément d'amortissement (3b) constitue des doigts extérieurs et intérieurs s'engageant les uns dans les autres (301, 302), les doigts extérieurs (301) étant connectés au bras (132) de la première structure (13) et les doigts intérieurs (302) étant connectés au bras (142) de la deuxième structure (14), et au moins certains des doigts s'engageant les uns dans les autres (301, 302) étant connectés les uns aux autres par le biais d'un élastomère ou par le biais d'un élastomère renforcé par des fibres (303).

6. Rotor selon la revendication 1 ou 2, **caractérisé en ce que** l'élément d'amortissement (3c) constitue des doigts extérieurs et intérieurs s'engageant les uns dans les autres (305), les doigts extérieurs étant connectés au bras (132) de la première structure (13) et les doigts intérieurs étant connectés au bras (142) de la deuxième structure (14) et au moins certains des doigts s'engageant les uns dans les autres (305) étant connectés les uns aux autres par le biais d'un liquide viscoélastique (304).

7. Rotor selon l'une quelconque des revendications précédentes, **caractérisé en ce que** l'élastomère (31, 36, 303, 304) est un caoutchouc.

8. Rotor selon l'une quelconque des revendications précédentes, **caractérisé en ce que** l'élastomère (31, 36, 303, 304) est un matériau viscoélastique.

9. Rotor selon l'une quelconque des revendications précédentes, **caractérisé en ce que** l'élastomère (31, 36, 303, 304) est renforcé avec du plastique renforcé par des fibres au moins dans des régions partielles.

10. Rotor selon l'une quelconque des revendications précédentes, **caractérisé en ce que** l'élément d'amortissement présente plusieurs couches de matériau, au moins l'une des couches de matériau étant formée par un élastomère ou présentant un tel élastomère.

11. Rotor selon l'une quelconque des revendications précédentes, **caractérisé en ce que** la première structure (13) est formée par l'anneau du disque de rotor (12), l'anneau (13) présentant un bras faisant saillie vers l'amont dans la direction axiale (131) et/ou un bras faisant saillie vers l'aval dans la direction axiale (132).

12. Rotor selon l'une quelconque des revendications précédentes, **caractérisé en ce que** la deuxième structure (14) est formée par une structure de liaison, la structure de liaison présentant un bras faisant saillie vers l'aval dans la direction axiale (142), le bras faisant saillie vers l'aval dans la direction axiale (142) de la structure de liaison (14) étant prévu et réalisé de manière à être accouplé à un arbre haute pression, un arbre moyenne pression ou un arbre basse pression (81) du moteur d'avion (1).

13. Rotor selon l'une quelconque des revendications précédentes, **caractérisé en ce que** le rotor (10) est un ventilateur de construction de type BLISK, les aubes de rotor (12) étant des aubes de ventilateur et le disque de rotor (11) étant un disque de ventilateur, la deuxième structure (14) étant formée par une structure de liaison qui présente un bras faisant saillie vers l'amont dans la direction axiale, et le bras faisant saillie vers l'amont dans la direction axiale (141) de la structure de liaison (14) étant prévu et réalisé de manière à être connecté à un cône de nez (2) du ventilateur.

14. Rotor selon l'une quelconque des revendications précédentes, **caractérisé en ce que** l'élément d'amortissement (3, 3a, 3b, 3c) présente un module d'élasticité qui est inférieur au module d'élasticité du matériau du disque de rotor (12) d'au moins un facteur 10, en particulier d'au moins un facteur 50, en particulier d'au moins un facteur 100, en particulier d'au moins un facteur 500, en particulier d'au moins un facteur 1000.

15. Ventilateur (10) de construction BLISK d'un moteur d'avion, présentant :
- un disque de ventilateur (12),
- une pluralité d'aubes de ventilateur (11) qui sont connectées au disque de ventilateur (12),
- le disque de ventilateur (12) constituant un anneau (13) qui limite radialement à l'intérieur un canal d'écoulement du moteur d'avion, l'anneau (13) présentant un bras faisant saillie vers l'amont dans la direction axiale (131) et/ou un bras faisant saillie vers l'aval dans la direction axiale (132),
- le disque de ventilateur (12) constituant une structure de liaison (14) qui présente un bras faisant saillie vers l'amont dans la direction axiale (141) et/ou un bras faisant saillie vers l'aval dans la direction axiale (142),
- les bras (131, 132) de l'anneau (13) et les bras (141, 142) de la structure de liaison (14) étant espacés les uns des autres dans la direction radiale,
- un bras disposé en amont (131) de l'anneau (13) et un bras disposé en amont (141) de la structure d'entraînement (141) et/ou un bras disposé en aval (132) de l'anneau (13) et un bras disposé en aval (142) de la structure de liaison (14) étant connectés les uns aux autres par un élément d'amortissement (3, 3a, 3b, 3c), et
- l'élément d'amortissement (3, 3a, 3b, 3c) présentant un élastomère (31, 36, 303, 304) ou étant formé par un élastomère (31, 36, 303, 304).
